(19) **Europäisches Patentamt** / **European Patent Office** / **Office européen des brevets**

(11) **EP 4 350 427 A1**

(12) # EUROPEAN PATENT APPLICATION
published in accordance with Art. 153(4) EPC

(43) Date of publication:
**10.04.2024 Bulletin 2024/15**

(21) Application number: **22816399.4**

(22) Date of filing: **27.05.2022**

(51) International Patent Classification (IPC):
*G02F 1/1337* (2006.01)    *G02B 5/30* (2006.01)
*G02F 1/1335* (2006.01)    *G02F 1/1343* (2006.01)
*G02F 1/139* (2006.01)    *G02F 1/1339* (2006.01)

(52) Cooperative Patent Classification (CPC):
**G02B 5/30; G02F 1/1335; G02F 1/1337;
G02F 1/1339; G02F 1/1343; G02F 1/139**

(86) International application number:
**PCT/KR2022/007589**

(87) International publication number:
**WO 2022/255740 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.06.2021 KR 20210072863**

(71) Applicant: Dongwoo Fine-Chem Co., Ltd.
**Iksan-si, Jeollabuk-do 54631 (KR)**

(72) Inventors:
• **KIM, Dong-Hwi**
  **Sejong 30100 (KR)**
• **KIM, Sung-Su**
  **Pyeongtaek-si, Gyeonggi-do 17802 (KR)**
• **SONG, Seung-Won**
  **Seoul 05853 (KR)**

(74) Representative: **Betten & Resch
Patent- und Rechtsanwälte PartGmbB
Maximiliansplatz 14
80333 München (DE)**

(54) **OPTICAL LAMINATE AND MANUFACTURING METHOD THEREFOR, SMART WINDOW INCLUDING SAME, AND WINDOW AND DOOR FOR VEHICLE OR BUILDING TO WHICH SAME IS APPLIED**

(57)    The disclosure relates to a transmittance variable optical laminate, a manufacturing method therefor, a smart window including the same, and a vehicle to which the same is applied. The transmittance variable optical laminate includes a first polarizing plate including a first transmission axis, a second polarizing plate including a second transmission axis, a first transparent conductive layer provided on one surface of the first polarizing plate, a second transparent conductive layer provided on one surface of the second polarizing plate, and a liquid crystal layer provided between the first transparent conductive layer and the second transparent conductive layer. The liquid crystal layer is driven in a twisted nematic (TN) mode, at least one of the first transparent conductive layer and the second transparent conductive layer is formed in directly contact with the polarizing plate, and a cross angle of the first transmission axis and the second transmission axis is less than or equal to 50°.

Fig. 1

100

| First polarizing plate | ~120-1 |
| First conductive layer | ~130-1 |
| Liquid crystal layer | ~110 |
| Second conductive layer | ~130-2 |
| Second polarizing plate | ~120-2 |

EP 4 350 427 A1

## Description

### Technical Field

The present disclosure relates to a transmittance variable optical laminate, a manufacturing method therefor, a smart window including the same, and a window and a door for a vehicle or a building to which the same is applied.

### Background Art

In general, there are many cases in which an external light blocking coating is applied to a window of a means of transportation such as a vehicle. However, the transmittance of a conventional window of a means of transportation is fixed, and the transmittance of the external light blocking coating is also fixed. Therefore, the entire transmittance of the conventional window of the means of transportation is fixed, thereby causing an accident. For example, when the entire transmittance is preset low, there is no problem during day when ambient light is sufficient. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Accordingly, a transmittance variable optical laminate capable of changing the transmittance of light when a voltage is applied has been developed.

The transmittance variable optical laminate is driven by changing the transmittance by driving liquid crystal according to voltage application. The transmittance variable optical laminate developed so far is manufactured by patterning and forming a conductive layer for driving liquid crystal on a separate substrate, and then combining the conductive layer with other elements such as a polarizing plate.

For example, Japanese Patent Publication Application No. 2018-010035 discloses a transmittance variable optical laminate including a transparent electrode layer formed on a polycarbonate (PC) substrate having a predetermined thickness.

However, when a separate or additional substrate is included to form the conductive layer as described above, as a manufacturing process becomes complicated, manufacturing costs is increased, the thickness of the laminate is increased, and the transmittance is changed due to occurrence of phase difference.

Accordingly, there is a need to develop a transmittance variable optical laminate capable of simplifying a manufacturing process, reducing the thickness by not including a separate substrate for forming a conductive layer.

### Disclosure

### Technical Problem

The present disclosure is intended to provide a transmittance variable optical laminate with simplified manufactured process by not including a separate or additional substrate for forming a conductive layer.

Another objective of the present disclosure is to provide a transmittance variable optical laminate in which the thickness is significantly reduced by no including a separate or additional substrate for forming a conductive layer.

Yet another objective of the present disclosure is to provide a transmittance variable optical laminate capable of ensuring predetermined transmittance even in a light blocking mode by adjusting a cross angle formed of absorption axes of two different polarizing plates.

Still another objective of the present disclosure is to provide a transmittance variable optical laminate capable of ensuring predetermined transmittance even in the light blocking mode with including an optical functional layer.

Yet another objective of the present disclosure is to provide a smart window including the transmittance variable optical laminate, and a vehicle or building window to which the same is applied.

However, the problem to be solved by the present disclosure is not limited to the problems mentioned above, and other problems not mentioned will be clearly understood by those skilled in the art from the description below.

### Technical Solution

The present disclosure relates to a transmittance variable optical laminate including: a first polarizing plate including a first transmission axis; a second polarizing plate including a second transmission axis; a first transparent conductive layer provided on one surface of the first polarizing plate; a second transparent conductive layer provided on one surface of the second polarizing plate; and a liquid crystal layer provided between the first transparent conductive layer and the second transparent conductive layer, wherein the liquid crystal layer is driven in a twisted nematic (TN) mode, at least one of the first transparent conductive layer and the second transparent conductive layer is formed in directly contact with the polarizing plate, and a cross angle of the first transmission axis and the second transmission axis is less than or equal to 50°.

In a first aspect of the present disclosure, each transparent conductive layer formed in directly contact with each polarizing plate may be formed in directly contact with each polarizing plate without a separate or additional substrate between each polarizing plate and each transparent conductive layer.

In a second aspect of the present disclosure, each transparent conductive layer formed in directly contact with each polarizing plate may be formed in directly contact with each polarizing plate with a highly adhesive layer between each polarizing plate and each transparent conductive layer.

In a third aspect of the present disclosure, total light transmittance in a light blocking mode may be 10% to 30%.

In a fourth aspect of the present disclosure, at least one of the first polarizing plate and the second polarizing plate may include a polarizer and at least one or more protective layers.

In a fifth aspect of the present disclosure, the protective layer may be a protective film or an optical functional film.

In a sixth aspect of the present disclosure, the optical functional film may be a retardation film.

In a seventh aspect of the present disclosure, a value of in-plane phase difference of the retardation film may be less than or equal to 100nm.

In an eighth aspect of the present disclosure, the protective film may include one or more kinds selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

In a ninth aspect of the present disclosure, the first polarizing plate and the second polarizing plate may have the thicknesses of 30μm to 200μm.

In a tenth aspect of the present disclosure, the first transparent conductive layer and the second transparent conductive layer may include one or more kinds selected from a group consisting of transparent conductive oxide, metal, carbonaceous matters, conductive polymers, conductive ink, and nanowires.

In an eleventh aspect of the present disclosure, the liquid crystal layer may include one or more kinds selected from a group consisting of a ball spacer and a column spacer.

In a twelfth aspect of the present disclosure, the ball spacer may have a diameter of 1 μm to 10μm.

In a thirteenth aspect of the present disclosure, the ball spacer may have an occupancy area in the liquid crystal layer of 0.01% to 10% of the area of the liquid crystal layer.

In a fourteenth aspect of the present disclosure, the transmittance variable optical laminate may include a refractive index regulating layer having a refractive index of 1.4 to 2.6.

Furthermore, the present disclosure relates to a manufacturing method of a transmittance variable optical laminate.

Furthermore, the present disclosure relates to a smart window including a transmittance variable optical laminate.

Furthermore, the present disclosure relates to a vehicle in which a smart window is applied to at least one of a front window, a rear window, a side window, a sunroof window, and an inner partition thereof.

Furthermore, the present disclosure relates to window and a door for a building, the window and the door including a smart window.

### Advantageous Effects

The transmittance variable optical laminate according to the present disclosure does not include a separate substrate for forming the conductive layer as the conductive layer is directly formed on one surface of the polarizing plate, so that the thickness thereof may be significantly reduced in comparison to the thickness of the conventional optical laminate.

Furthermore, the transmittance variable optical laminate according to the present disclosure is configured to omit the process of forming a conductive layer on a separate substrate for the conventional optical laminate and bonding the conductive layer and other members, so the manufacturing process thereof can be simplified in comparison to the convention optical laminate.

Furthermore, according to the present disclosure, the transmittance variable optical laminate is configured to ensure predetermined transmittance even in the light blocking mode, so that external light is blocked and visibility from the inside space can be ensured and the transmittance variable optical laminate can be applied to various technical fields compared to the conventional optical laminate.

### Description of Drawings

FIG. 1 is a view showing a laminate structure of a transmittance variable optical laminate according to an embodiment of the present disclosure.

FIG. 2 is a view showing absorption axes of two different polarizing plates according to the embodiment of the present disclosure.

FIG. 3 is a view showing a laminate structure of a transmittance variable optical laminate to which a second layer is coupled according to another embodiment of the present disclosure.

FIG. 4 is a view showing a laminate structure of a transmittance variable optical laminate to which a second layer is coupled according to another embodiment of the present disclosure.

FIG. 5 is a view showing a laminate structure of a transmittance variable optical laminate in which a pressure sensitive adhesive/adhesive according to another embodiment of the present disclosure is formed on one surface thereof.

FIG. 6 is a view showing a laminate structure of a transmittance variable optical laminate to which a second layer is coupled according to another embodiment of the present disclosure.

FIG. 7 is a view showing a laminate structure of a transmittance variable optical laminate formed according to another embodiment of the present disclosure.

FIG. 8 is a view schematically showing steps of forming a polarizing plate according an embodiment of the present disclosure.

FIG. 9 is a view schematically showing a process of forming the transmittance variable optical laminate by forming a conductive layer on the polarizing plate according to the embodiment of the present disclosure.

FIG. 10 is a view schematically showing a process of forming a transmittance variable optical laminate to which a second layer is coupled according to another embodiment of the present disclosure.

FIG. 11 is a view schematically showing a process of forming a transmittance variable optical laminate to which a second layer is coupled according to another embodiment of the present disclosure.

FIG. 12 is a view schematically showing a process of forming a transmittance variable optical laminate to which a second layer is coupled according to another embodiment of the present disclosure.

## Mode for Invention

The present disclosure relates to a transmittance variable optical laminate, which has a conductive layer for driving liquid crystal formed directly on one surface of a polarizing plate without a separate or additional substrate or base material for forming the conductive layer, and is capable of ensuring predetermined transmittance in a light blocking mode by appropriately adjusting absorption axes of two different polarizing plates.

More specifically, the transmittance variable optical laminate includes: a first polarizing plate including a first transmission axis; a second polarizing plate including a second transmission axis; a first transparent conductive layer provided on one surface of the first polarizing plate; a second transparent conductive layer provided on one surface of the second polarizing plate; and a liquid crystal layer provided between the first transparent conductive layer and the second transparent conductive layer. The liquid crystal layer is driven in a twisted nematic (TN) mode. At least one of the first transparent conductive layer and the second transparent conductive layer is formed in directly contact with the polarizing plate, and a cross angle of the first transmission axis and the second transmission axis is less than or equal to 50°.

The transmittance variable optical laminate of the present disclosure is particularly suitable for technical fields where light transmittance can be changed in response to application of voltage, for example, may be used for a smart window.

The smart window means a window controlling the amount of light or heat passing through the window by changing light transmittance in response to an electrical signal. In other words, the smart window is provided to be changed into a transparent, opaque or translucent state by voltage and is called variable transmittance glass, lighting control glass, or smart glass.

A smart window may be used as a partition for partitioning the internal space of a vehicle and a building or as a partition for privacy, and may be used as a skylight window arranged at an opening of a building. Furthermore, the smart window may be used as highway signs, notice boards, score boards, clocks or advertisement screens, and may be used to replace windows of vehicles, buses, airplanes, ships, or trains, or windows of means of transportation, such as a sunroof.

The transmittance variable optical laminate of the present disclosure may also be used as the smart window of the above-described various technology fields. However, the transparent conductive layer is directly formed on the polarizing plate, and a separate or additional substrate for forming the transparent conductive layer is not included, so that the transmittance variable optical laminate is thin in thickness and is advantageous in the curve characteristic. Therefore, the transmittance variable optical laminate may be appropriately used for the smart window for a vehicle or a building. According to one or a plurality of embodiments, the smart window to which the transmittance variable optical laminate of the present disclosure is applied may be used for front windows, rear windows, side windows, and sunroof windows of a vehicle, or windows and doors for a building. Furthermore, the smart window may be used to not only an external light blocking use, but also an internal space partitioning use or a privacy protecting use such as an inner partition for a vehicle or a building.

Hereinbelow, embodiments of the present disclosure will be described in detail with reference to drawings. However, the following drawings accompanied to this specification illustrate preferred embodiments of the present disclosure, and serve to further understand the technical idea of the present disclosure with the contents of the above-described invention. Therefore, the present disclosure should not be construed as being limited to matters described in the drawings.

Terms used in this specification are selected to describe embodiments and thus does not limit the present disclosure. In this specification, an element expressed in a singular form may be plural elements unless it is necessarily singular in the context.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms ⌈below⌋ - ⌈lower surface⌋ - ⌈lower portion⌋, ⌈above⌋ - ⌈upper surface⌋ - ⌈upper portion⌋ may be used to easily describe correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being ⌈below⌋ or ⌈lower⌋ with respect to another element may be placed ⌈on⌋ the another element. Accordingly, the exemplary term ⌈below⌋ may include both downward and upward directions. An element may be aligned in a different direction, and accordingly, the spatially relative terms may be interpreted according to orientation.

The ⌈planar direction⌋ used in this specification may be interpreted as a direction perpendicular to a polarizing plate and/or a transparent conductive layer, that is, a direction viewed from the user's view side.

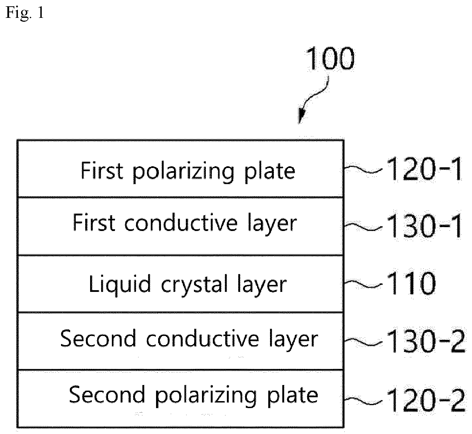

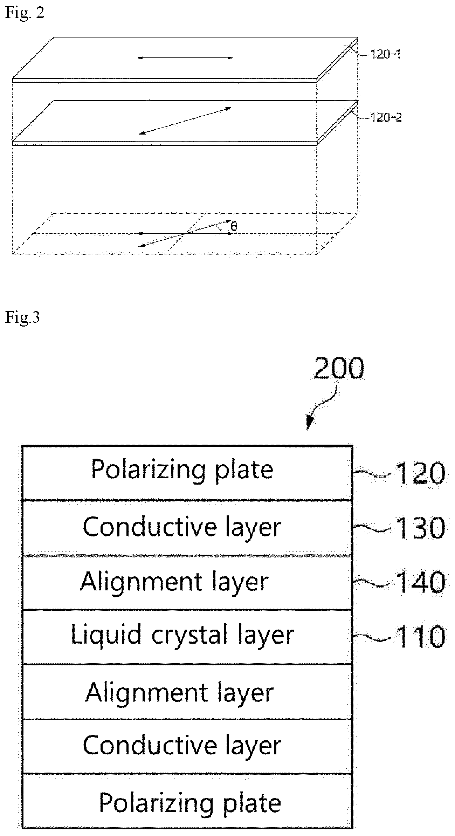

FIG. 1 is a view showing a laminate structure of a transmittance variable optical laminate 100 according to an embodiment of the present disclosure. FIG. 2 is a view showing absorption axes of two different polarizing plates according to the embodiment of the present disclosure.

Referring to FIG. 1, according to the embodiment of the present disclosure, the transmittance variable optical laminate 100 may include a liquid crystal layer 110, a polarizing plate 120, and a transparent conductive layer 130.

The liquid crystal layer 110 is characterized to be driven in response to an electric field. The liquid crystal layer 110 may be located between a first polarizing plate and a second polarizing plate that are located in a light control region of the optical laminate 100. According to the embodiment, the liquid crystal layer 110 may be located in a space provided by a sealant layer (not shown) and a spacer (not shown) provided between a first polarizing plate 120-1 and a second polarizing plate 120-2 in the light control region. Furthermore, the liquid crystal layer 110 may adjust transmittance of light incident from an external light source in response to an electric field formed between a first transparent conductive layer 130-1 and a second transparent conductive layer 130-2.

The liquid crystal layer 110 is preferably driven in a twisted nematic (TN) mode in order to ensure ease of manufacturing and driving and predetermined transmittance in the light blocking mode.

According to another embodiment of the present disclosure, the liquid crystal layer 110 may include one or more kinds of spacers selected from a group consisting of a ball spacer and a column spacer, and specifically, it is preferable that the included spacer is a ball spacer. The ball spacer may include one or more ball spaces, and preferably has a diameter of 1 to 10 μm. Furthermore, when viewed in a planar direction, a region where the ball spacer is occupied in the liquid crystal layer 110 (i.e., light control region) is preferably 0.01 to10% of the area of the liquid crystal layer 110 in an aspect of improvement of user's visibility and transmittance in a light transmissive mode.

The polarizing plate 120 may transmit sporadically incident light in one direction, and may regulate the amount of light passing through the polarizing plate 120 by using polarization properties thereof to adjust the transmittance of the optical laminate.

Referring to FIG. 2, the polarizing plate 120 may include the first polarizing plate 120-1 and the second polarizing plate 120-2, and the first polarizing plate 120-1 is formed at an upper portion of the optical laminate on the basis of the liquid crystal layer 110 and includes a first transmission axis and the second polarizing plate 120-2 is formed at a lower portion of the optical laminate and includes a second transmission axis.

At this point, a cross angle θ between the first transmission axis and the second transmission axis may be less than or equal to 50° and, preferably, may be an angle of 10° to 50° and, more preferably, may be an angle of 10° to 30°. The cross angle θ means an angle formed by the first transmission axis and the second transmission axis in a planar direction and, specifically, may mean an acute angle. When the cross angle θ satisfies the above-described range, by allowing the optical laminate to ensure predetermined transmittance even in the light blocking mode, the optical laminate may have both of external light blocking effect and security function of internal sight. For example, in the light blocking mode, the total light transmittance of the optical laminate may be equal to or higher than 10% and, preferably, may be 10% to 30% and, more preferably, may be 20% to 30%. When the total light transmittance satisfies the above-described range, it may be advantageous to ensure the proper external light blocking effect and the internal sight security.

At least of one of the first polarizing plate 120-1 and the second polarizing plate 120-2 may include a polarizer and at least one or more protective layers. For example, the protective layer may only be provided on one surface of the polarizer, and may be provided on both surfaces of the polarizer. When the protective layer includes a plurality of protective layers, the plurality of protective layers protective layers may be used in a multi-stage structure in which one or more protective layers are successively laminated, and at this point, two different protective layers may have substantially the same or similar properties.

The protective layer may be a protective film to preserve the characteristics of polarization of the polarizer from a post-processing and external environment or an optical functional film to complement the optical characteristics of the optical laminate, and the protective layer may serve to provide a structural base in which the transparent conductive layer 130 to be described below may be formed. At this point, the protective layer is preferably formed to have properties facilitating formation of the transparent conductive layer 130.

According to one or a plurality of embodiments, the protective film may include one or more kind selected from a group consisting of polyester resin such as polyethylene terephthalate (PET), polyethylene isophthalate (PEI), polyethylene naphthalate (PEN), polybutylene terephthalate (PBT), etc.; cellulose resin such as diacetyl cellulose, triacetyl cellulose (TAC), etc.; polycarbonate (PC) resin; polyethylene (PE) resin; polypropylene (PP) resin; acrylic resin such as polymethyl acrylate (PMA), polymethyl methacrylate (PMMA), polyethyl acrylate (PEA), polyethyl methacrylate (PEMA), etc.; and cyclic olefin polymer (COP).

According to the embodiment, the optical functional film is not particularly limited as long as it can reinforce or supplement the optical function of the polarizing plate 120. For example, in order to delay the phase of light passing through the liquid crystal layer, the optical functional layer may be a phase retardation film such as a quarter-wave plate (1/4 wave plate), a half-wave plate (1/2 wave plate), and may be used along or in combination.

The retardation film may be a polymer stretched film or a liquid crystal polymerized film, formed by stretching a polymer film that can impart optical anisotropy by stretching in an appropriate manner.

The description of the protective film may be equally applied to the polymer stretched film and, for example, the polymer stretched film may use a polymer layer including: polyolefin such as polyethylene (PE), polypropylene (PP), etc.; cyclo olefin polymer (COP) such as, polynorbornene, etc.; polyester such as polyvinyl chloride (PVC), polyacrylonitrile (PAN), polysulfone (PSU), acryl resin, polycarbonate (PC), polyethylene terephthalate (PET), etc.; and/or cellulose ester polymer such as polyacrylate, polyvinyl alcohol (PVA), triacetyl cellulose (TAC), etc., or a copolymer of two or more monomers among monomers that can form the polymers.

An obtaining method of the polymer stretched film is not particularly limited and, for example, may be obtained by forming the polymer material into a film shape and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T-die, a circular die, etc., may be mounted. When a molded product is obtained in extrusion molding, a material made by melt-kneading various resin components, additives, etc., in advance, may be used and the molded product may be formed by melt-kneading during extrusion molding. Furthermore, various resin components are dissolved by using common solvent, for example, solvent such as chloroform, 2 methylene chloride, and then is solidified in a cast dry manner, and accordingly the non-stretched film may be cast-molded.

The polymer stretched film may be provided by performing uniaxial stretching with respect to the molded film in a mechanical direction (MD, longitudinal or length direction), and by performing uniaxial stretching in a direction (TD, transverse direction or width direction) perpendicular to the MD, and furthermore, the molded film is stretched in a sequential biaxial stretching method of roll stretching and tenter stretching, a simultaneous biaxial stretching method of tenter stretching, a biaxial stretching method of tubular stretching, etc., so that a biaxial stretched film may be manufactured.

The liquid crystal polymerized film may contain reactive liquid crystal compound in a polymerized state. The reactive liquid crystal compound may mean a compound, for example, containing a mesogen frame, etc., and also containing one or more polymerizable functional groups. The reactive liquid crystal compound may be variously known by the name reactive mesogen (RM). The reactive liquid crystal compound may constitute a cured film with polymer network formed while being polymerized by light or heat and maintaining liquid crystal arrangement.

The reactive liquid crystal compound may be a mono-functional liquid crystal compound or a multi-functional liquid crystal compound. The mono-functional liquid crystal compound is a compound having 1 polymerizable functional group, and the multi-functional liquid crystal compound may mean a compound having two or more polymerizable functional groups.

When the optical functional film is the retardation film, a value of in-plane phase difference, e.g. in-plane retardation value, of the retardation film may be less than or equal to 100nm and, preferably, may be less than or equal to 60nm. When the in-plane phase difference of the retardation film meets the above-described range, with the above-described cross angle θ, the in-plane phase difference allows the optical laminate to ensure appropriate transmittance in the light blocking mode.

A value of the in-plane phase difference may be calculated by the follow equation 1.

[Equation 1]

$$R_{in} = |nx - ny| \times d$$

In the equation 1, $R_{in}$ is in-plane phase difference, nx and ny are respectively a refractive index in an x-axial direction of the retardation film and a refractive index in a y-axial direction, and d is thickness of the retardation film. These definitions may be equally applied in the specification unless otherwise specified.

In the above description, the x-axial direction may mean an in-plane slow direction of the retardation film, the y-axial direction may mean an in-plane fast direction perpendicular to the x axis, and the z-axial direction may mean a normal direction of a plane formed by the x axis and the y axis, for example, the thickness direction of the retardation film. In the specification, the slow axis may mean an axis in parallel to a direction with highest refractive index based on a planar direction of the retardation film. Unless specifically specified otherwise when referring to the refractive index in this specification, the refractive index is a refractive index for light with a wavelength of about 550 nm.

As the method for adjusting the in-plane phase difference of the retardation film, methods commonly used in the industry can be applied, for example, when the retardation film is the polymer stretched film, a value of the in-plane phase difference may be adjusted by adjusting material, thickness, stretching ratio, etc. In another embodiment, when the retardation film is a liquid crystal polymerized film, a value of the in-plane phase difference may be adjusted by adjusting thickness, a double refractive value of the liquid crystal layer.

In one or a plurality of embodiments, the thickness of the retardation film may be between 10μm to 100μm in the polymer stretched film, and may be between 0.1μm to 5μm in the liquid crystal polymerized film.

In one or a plurality of embodiments, the optical functional film may be directly formed on one surface of the polarizer, and may be provided on an upper surface of the protective film.

The polarizer of each of the polarizing plates 120 may include an elongated polarizer, or may be formed into an elongated polarizing plate. According to an embodiment, the elongated polarizer may include an elongated polyvinyl alcoholic (PVA)-based resin. The PVA-based resin may be PVA-based resin obtained by saponifying polyvinyl acetate resin. As the polyvinyl acetate-based resin, in addition to polyvinyl acetate that is homopolymer of vinyl acetate, vinyl acetate and a copolymer with other monomers that can be copolymerized with vinyl acetate. As the other monomers, unsaturated carboxylic acid-based monomers, unsaturated sulfonic acid-based monomers, olefin-based monomers, vinyl ether-based monomers, acrylamide having ammonium groups-based monomers, and the like may be used. Furthermore, the PVA-based resin is denatured, and may be polyvinyl formal or polyvinyl acetal denatured into aldehyde.

Furthermore, the polarizing plate 120 may include a coated polarizer. According to an embodiment, the coated polarizer may be formed of a composition for liquid crystal coating, and, at this point, the composition for liquid crystal coating may contain reactive liquid crystal compound, and dichroic dye.

The description of the reactive liquid crystal compound of the retardation film described above may be equally applied to the reactive liquid crystal compound. Therefore, as the reactive liquid crystal compound is used, the polarizer of a thin film shape with improved mechanical and thermal stability while maintaining optically anisotropic or dielectric permittivity property of liquid crystal may be formed.

The dichroic dye is a substance contained in the composition for liquid crystal coating to impart the polarization characteristic, and has a property in which absorbance in a direction of long axis of molecule and absorbance in a direction of short axis. The dichroic dye may adopt a dichroic dye developed before or later. For example, the dichroic dye may contain acridine dye, oxazine dye, cyanin dye, naphthalene dye, azo dye, anthraquinone dye, etc., and these may be used alone or in combination.

The composition for liquid crystal coating may contain a solvent capable of dissolving the reactive liquid crystal compound and the dichroic dye. For example, propylene glycol monomethyl ether acetate (PGMEA), methyl ethyl ketone (MEK), xylene, chloroform, and the like. Furthermore, the composition for liquid crystal coating may contain levelling agents, polymerization initiators, etc. within a range that does not impair the polarization characteristic of a coating film.

Furthermore, the polarizing plate 120 may be formed with a member having orientation. For example, the polarizing plate 120 may be formed by coating and hardening composition for alignment layer coating containing aligned polymers, photopolymerization initiators, and solvent on each protective layer to form the member having orientation, then by coating and curing the composition for liquid crystal coating on the member. Although the aligned polymer is not particularly limited, the aligned polymer may be polyacrylate-based resin, polyamic resin, polyimide-based resin, polymer having cinnamate groups, etc. and may use polymer capable of expressing orientation, the polymer may be developed before or later.

According to an embodiment, the polarizing plate 120 may include an overcoat layer. For example, the overcoat layer may be located on an upper surface of a layer formed by the composition for liquid crystal coating and may be provided to face the member having the orientation. According to some embodiments, a protective film may be additionally provided on an upper surface of the overcoat layer. In this case, the polarizing plate may have a laminate structure of a member having orientation-a layer formed by the composition for liquid crystal coating-an overcoat layer-a protective film. Accordingly, the mechanical durability can be further improved while maintaining transmittance at a constant level.

According to an embodiment, the polarizing plate 120 may have a thickness of 30 to 200 μm, and preferably, a thickness of 30 to 170 μm, and more particularly, a thickness of 50 to 150 μm. In this case, while the polarizing plate 120 maintains the optical characteristic, the optical laminate having a thin thickness can be manufactured.

The polarizing plate 120 may have an incurvate shape in order to manufacture the optical laminate having a curved surface, and for example, may be formed to be curved towards either of the two different polarizing plates 120 that are laminated on both surfaces of the liquid crystal layer 110.

The transparent conductive layer 130 may include a first transparent conductive layer 130-1 provided on one surface of the first polarizing plate and a second transparent conductive layer 130-2 provided on one surface of the second polarizing plate.

The transparent conductive layer 130 may be formed in directly contact with the polarizing plate 120 and, for example, the first transparent conductive layer 130-1 may be formed in directly contact with the first polarizing plate 120-1, and/or the second transparent conductive layer 130-2 may be formed in directly contact with the second polarizing plate 120-2.

In the embodiment, the transparent conductive layer 130 formed in directly contact with the polarizing plate 120 means that the transparent conductive layer 130 shares a contact surface with the polarizing plate 120 so as to be provided on the polarizing plate 120 without a separate substrate. For example, forming the transparent conductive layer 130 in directly contact with the polarizing plate 120 may mean that the transparent conductive layer 130 may be formed by being deposited on the upper surface of the protective layer formed at the polarizing plate 120. At this point, in order to improve the adhesion between the transparent conductive layer 130 and the polarizing plate 120, the transparent conductive layer 130 may be formed by performing pre-processing such as a corona processing or a plasma processing on one surface of each polarizing plate 120, and then directly contacting with the surface of each polarizing plate to which the pre-processing is performed. The pre-processing is not limited to the corona processing or the plasma processing, and may adopt a pre-processing developed before or later without harming the purpose of the present disclosure.

According to another embodiment of the present disclosure, with respect to the transparent conductive layer 130 formed in directly contact with the polarizing plate 120, in order to improve the adhesion between the transparent conductive layer 130 and the polarizing plate 120, the transparent conductive layer 130 may be formed in directly contact with each polarizing plate with the highly adhesive layer located therebetween, the highly adhesive layer being provided on one surface of each polarizing plate.

The transparent conductive layer 130 is preferably have the transmittance with respect to visible light of 50% or more, and for example, may include one or more kinds selected from a group consisting of transparent conductive oxide, metal, a carbonaceous material, conductive polymer, conductive ink, and nanowires, but the present disclosure is not limited thereto, and a material of a transparent conductive layer developed before or later may be used.

According to one or a plurality of embodiments, the transparent conductive oxide may include one or more kinds selected from a group consisting of indium tin oxide (ITO), indium zinc oxide (IZO), aluminum zinc tin oxide (IZTO), aluminum zinc oxide (AZO), gallium zinc oxide (GZO), florin tin oxide (FTO), zinc oxide (ZnO), etc. Furthermore, the metal may include one or more kinds selected from a group consisting of aurum (Au), argentum (Ag), cuprum (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), alloy containing at least one of them, etc., and for example, may include argentum - palladium - cuprum (APC) alloy or cuprum - calcium (CuCa) alloy. The carbonaceous matter may include one or more kinds selected from a group consisting of carbon nanotube (CNT), graphene, etc., and the conductive polymer may include one or more kinds selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, the transparent conductive layer 130 may be formed by combining these matters in a structure of two or more layers. For example, in order to reduce the reflectance of incident light and increase the transmittance, the transparent conductive layer 130 may be formed in a structure of two layers including a metal layer and a transparent conductive oxide.

FIG. 3 is a view showing a laminating structure of a transmittance variable optical laminate 200 to which a second layer is coupled according to another embodiment of the present disclosure. According to the embodiment of FIG. 3, the optical laminate 200 may include the liquid crystal layer 110, the polarizing plate 120, the conductive layer 130, and an alignment layer 140 formed on at least one surface of the liquid crystal layer 110.

The alignment layer 140 may have substantially the same characteristics as the above-described member having orientation, and for example, may be formed by applying an aligned matter such as polyimide, etc., and then performing a rubbing process.

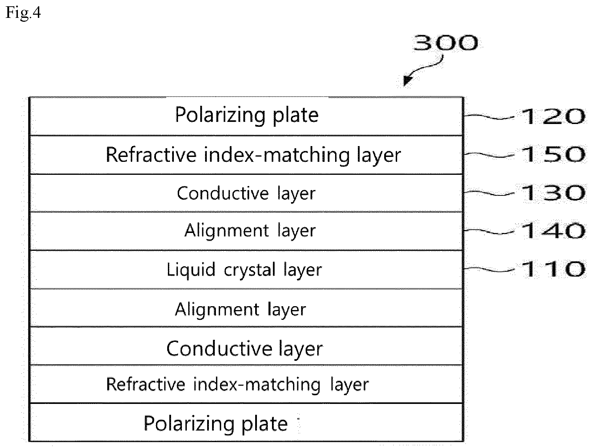

FIG. 4 is a view showing a laminating structure of a transmittance variable optical laminate 300 to which a second layer is coupled according to another embodiment of the present disclosure. According to an embodiment of FIG. 4, the optical laminate 300 may include the liquid crystal layer 110, the polarizing plate 120, the transparent conductive layer 130, the alignment layer 140, and a refractive index-matching layer(IML; index matching layer) 150.

The refractive index-matching layer 150 is provided to compensate for the difference between transmittance ratios of the optical laminate by the transparent conductive layer 130, and may serve to improve the visible characteristic by reducing the difference of the refractive index. Furthermore, the refractive index-matching layer 150 may be provided to correct a color based on the transparent conductive layer 130. Meanwhile, when the transparent conductive layer 130 has a pattern, the refractive index-matching layer 150 may correct the difference of transmittance between a region with the pattern and a non-pattern region without non pattern.

Specifically, the transparent conductive layer 130 is laminated close to other members having a refractive index different therefrom (for example, the polarizing plate 120, etc.), and due to the difference of the refractive index between the transparent conductive layer 130 and another layer close thereto, the difference of optical transmittance may be caused. Specifically, when a pattern is formed on the transparent conductive layer 130, a problem in that the pattern region and the non-pattern region are visually distinguished from each other. Therefore, the refractive index-matching layer 150 is located between each polarizing plate 120 and the transparent conductive layer 130 to compensate for refractive index so as to reduce the difference with the optical transmittance of the optical laminate. Specifically, when a pattern is formed on the transparent conductive layer 130, the pattern region and the non-pattern region should be provided so as not to be visually distinguished. The refractive index of the refractive index-matching layer 150 may be preset to be greater than the refractive index of the protective layer of each polarizing plate 120, and to be less than or equal to the refractive index of the transparent conductive layer 130. The refractive index may be properly selected depending on materials of each polarizing plate 120 and the transparent conductive layer 130, but it is preferable that refractive index is a range of 1.4 to 2.6, and more preferably, may be a range of 1.4 to 2.4. As described above, as the refractive index-matching layer 150 is preset as a preset refractive index, optical loss due to a sharply refractive difference between the polarizing plate 120 and the transparent conductive layer 130 can be prevented. The refractive index-matching layer 150 is not particularly limited as long as it can prevent the sharply refractive difference between the polarizing plate 120 and the transparent conductive layer 130. For example, the refractive index-matching layer 150 may be formed from refractive index-matching layer formation composition including polymerizable isocyanate compound.

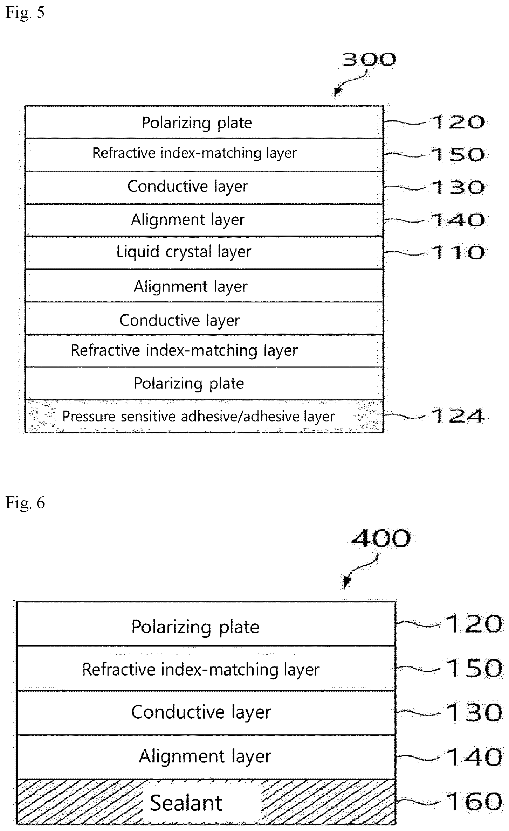

FIG. 5 is a view showing a laminating structure of a transmittance variable optical laminate in which a pressure sensitive adhesive/adhesive according to another embodiment of the present disclosure is formed on one surface thereof.

According to the embodiment of FIG. 5, the optical laminate 300 may include a pressure sensitive adhesive/adhesive layer 124 on one surface of the optical laminate 300 according to the embodiment of FIG. 4.

The pressure sensitive adhesive/adhesive layer 124 may be formed using an adhesive or a pressure sensitive adhesive, and have appropriate pressure sensitive adhesion/adhesion to prevent peeling, bubbles, etc. from occurring when handling the optical laminate 300, and preferably have transparency and thermal stability.

The adhesive may adopt an adhesive developed before or later, for example, may use photocurable adhesive.

The photocurable adhesive provides strong adhesion by being crosslinked and cured by receiving active energy rays such as ultraviolet (UV), electron beam (EB), etc., and may be composed of reactive oligomers, reactive monomers, photopolymerization initiators, and the like.

The reactive oligomers are important components that determine the properties of adhesive, and form polymer binding by photopolymerization to form a cured film. For example, the available oligomers may be polyester-based resin, polyether-based resin, polyurethane-based resin, epoxy-based resin, polyacryl-based resin, silicon-based resin, and the like.

The reactive monomers may serve as crosslinker, diluent of the reactive oligomers described above, and affect adhesion characteristics. For example, the available reactive monomers may be monofunctional monomers, multifunctional monomers, epoxy-based monomers, vinyl ethers, cyclic ethers, and the like.

The photopolymerization initiators may absorb light energy to generate radicals or cations to initiate photopolymerization, and a proper kind may be selected and used depending on photopolymerization resin.

The pressure sensitive adhesive may use a pressure sensitive adhesive developed before or later. According to one or a plurality of embodiments, as the pressure sensitive adhesive, acrylic-based pressure sensitive adhesive, rubber-based pressure sensitive adhesive, silicon-based pressure sensitive adhesive, urethane-based pressure sensitive adhesive, polyvinyl alcohol-based pressure sensitive adhesive, polyvinyl pyrrolidone-based pressure sensitive adhesive, polyacrylamide-based pressure sensitive adhesive, cellulose-based pressure sensitive adhesive, vinylalky ether-based pressure sensitive adhesive and the like. The pressure sensitive adhesive is not particularly limited as long as it has pressure sensitive adhesion and viscoelasticity. In an aspect of ease of acquisition, preferably, the pressure sensitive adhesive may include acrylic-based pressure sensitive adhesive, for example, may be (meth) acrylate copolymers, crosslinkers, solvents, and the like.

The crosslinkers may adopt crosslinkers developed before or later and, for example, polyisocyanate compounds, epoxy resins, melamine resins, urea resins, dialdehydes, methylol polymers, etc., and may preferably include polyisocyanate compounds.

The solvents may include common solvents used in the field of resin compositions. For example, the solvents may use solvents such as: alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used along or combination of two or more kinds.

The thickness of the pressure sensitive adhesive/adhesive layer may be appropriately determined depending on a kind of resins serving as the pressure sensitive adhesive/adhesive, the strength of the pressure sensitive adhesive/adhesive, the environment where the pressure sensitive adhesive/adhesive is used, and the like. According to an embodiment, the pressure sensitive adhesive/adhesive layer may have a thickness of $0.01\mu$m to $50\mu$m in order to ensure sufficient adhesion and minimize the thickness of the optical laminate and, preferably, may have a thickness of $0.05\mu$m to $20\mu$m and, more preferably, may have a thickness of $0.1\mu$m to $10\mu$m.

FIG. 6 is a view showing a laminating structure of a transmittance variable optical laminate 400 to which a second layer is coupled according to another embodiment of the present disclosure. According to the embodiment of FIG. 6, the optical laminate 400 may include the liquid crystal layer (not shown), the polarizing plate 120, the conductive layer 130, the alignment layer 140, the refractive index-matching layer 150, and a sealant layer 160 formed at an outer portion of the liquid crystal layer. The sealant layer 160 is provided to couple the two different polarizing plates to each other, and may be located at an inactivate region, between the two different polarizing plates. Furthermore, the sealant layer 160 may secure a space where the liquid crystal layer is provided between the two different polarizing plates with the spacer.

The sealant layer 160 may include curable resins as base resins. As the base resins, UV curable resins or heat curable resins that are known to be usable for sealants in the art may be used. The ultraviolet curable resins may be polymers of UV curable monomers. The heat curable resins may be polymers of heat curable monomers.

As the base resins of the sealant, for example, acrylate-based resins, epoxy-based resins, urethane-based resins, phenol-based resins, or compounds of these resins. According to an embodiment, the base resins may be acrylate-based resins, and the acrylate-based resins may be polymers of acrylic monomers. For example, the acrylic monomers may be multifunctional acrylate. According to another embodiment, the sealant may include monomer substances in addition to the base resins. For example, the monomer substances may be monofunctional acrylate. In the specification, the monofunctional acrylate may mean compounds having one acryl group, and the multifunctional acrylate may mean compounds having two or more acryl group. The curable resins may be cured by UV irradiation and/or heating. The UV irradiation condition or heat condition may be performed appropriately within the scope that does not damage the objective of the present disclosure. In case of need, the sealant may include initiators, for example, optical initiators or heat initiators.

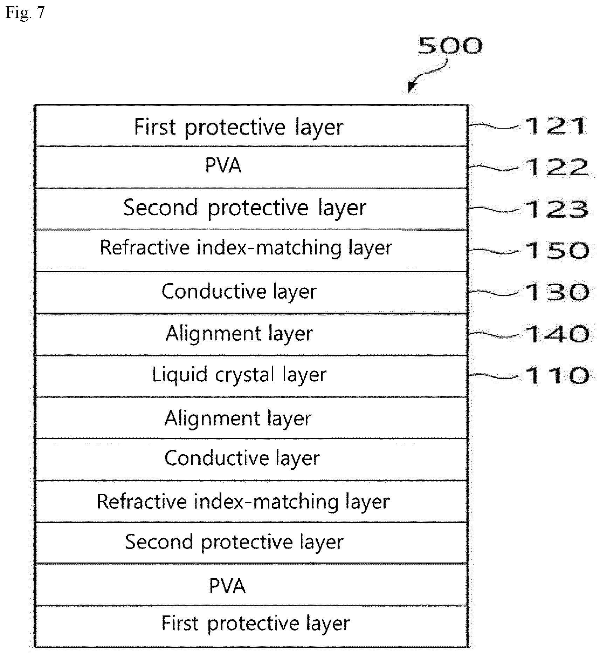

FIG. 7 is a view showing a laminating structure of a transmittance variable optical laminate 500 formed according to another embodiment of the present disclosure.

The optical laminate 500 according to the embodiment of FIG. 7 includes the liquid crystal layer 110, the polarizing plate 120, the transparent conductive layer 130, the alignment layer 140, and the refractive index-matching layer 150, and the polarizing plate 120 may include a first protective layer 121, a poly vinyl alcohol (PVA) 122, and a second protective layer 123.

The PVA 122 located at a center portion of the polarizing plate 120 is made of a material adjusting color implementation, and a direction and penetration of light, and may be provided as an embodiment of the polarizer mentioned above. Furthermore, the first protective layer 121 is provided to protect the PVA 122, and is provided as an embodiment of the protective layer mentioned above. At this point, the description of the protective film described above may be applied to the first protective layer 121 and, for example, may use cellulose triacetate (TAC), and the like Furthermore, the second protective layer 123 may be provided as an embodiment of the retardation film described above. At this point, the description of the retardation film described above may be applied to the second protective layer 123 and, for example, may use cyclic olefin polymer (COP), and the like.

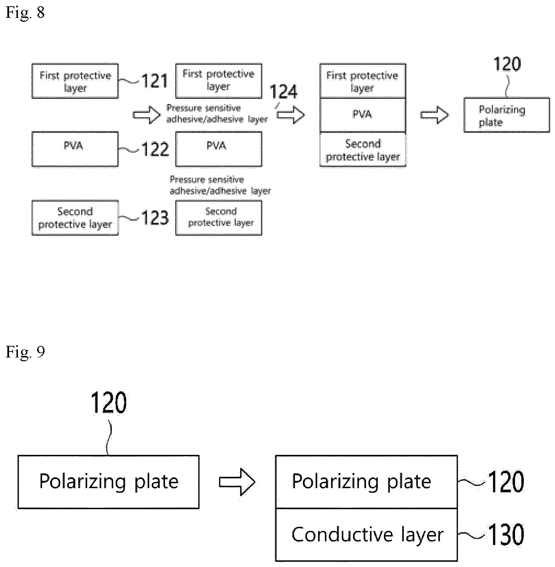

FIG. 8 is a view schematically showing steps of manufacturing a polarizing plate according an embodiment of the present disclosure. According to the embodiment of FIG. 8, the polarizing plate 120 may include the first protective layer 121 and the second protective layer 123 on a first surface and a second surface based on the PVA 122 that is the polarizer as the center.

Furthermore, the first protective layer 121 and the second protective layer 123 may be coupled to the PVA 122 by using the pressure sensitive adhesive/adhesive 124. The pressure sensitive adhesive/adhesive 124 is not particularly limited as long as it has appropriate pressure sensitive adhesion/adhesion, transparency, and thermal stability and, for example, the pressure sensitive adhesive/adhesive 124 may be substantially the same as the pressure sensitive adhesive/adhesive 124 described above.

The bonding method of the PVA 122 and the first and second protective layers 121 and 123 by using the pressure sensitive adhesive/adhesive 124 may be performed by a bonding method commonly used in the art. For example, there may be provided a method in which a pressure sensitive adhesive/adhesive composition is applied to a bonding surface of the polarizer or the protective layer by using a flexibility method, Mayer bar coating method, Gravure coating method, die coating method, dip coating method, spray coating method, etc., and then the polarizer or the protective layer is inserted into a niff roll, etc. to be bonded.

FIG. 9 is a view schematically showing a process of forming the transmittance variable optical laminate by forming a transparent conductive layer on the polarizing plate according to the embodiment of the present disclosure. According to the embodiment of FIG. 9, the transparent conductive layer 130 may be directly formed on the polarizing plate 120. At this point, the polarizing plate 120 may include the protective layer as described above, and the protective layer may be used as a substrate of the transparent conductive layer 130 formed in the optical laminate. The transparent conductive layer 130 is not particularly limited as long as it has optical transparency and conductivity and, for example, may be substantially the same as the transparent conductive layer 130 in FIG. 1 as described above.

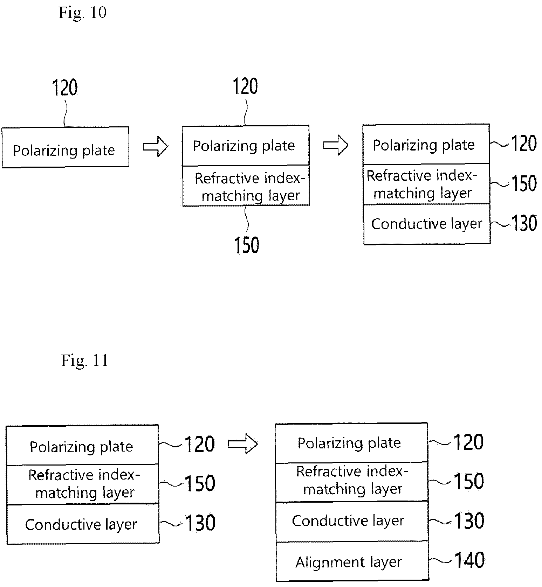

FIG. 10 is a view schematically showing a process of forming a transmittance variable optical laminate to which a second layer is coupled according to another embodiment of the present disclosure. According to the embodiment of FIG. 10, after the refractive index-matching layer 150 is formed on the polarizing plate 120, the conductive layer 130 may be laminated thereon. The refractive index-matching layer 150 is not particularly limited as long as it can compensate the difference in transmittance of the optical laminate and correct a color caused from the transparent conductive layer. For example, the refractive index-matching layer 150 may be substantially the same as the refractive index-matching layer 150 in FIG. 4 as described above. The refractive index-matching layer 150 may be formed on the protective layer of the polarizing plate 120.

The transparent conductive layer 130 and the refractive index-matching layer 150 may be formed in a method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as chemical vapor deposition (CVD), physical vapor deposition (PVD), plasma enhanced chemical vapor deposition (PECVD), etc.

FIG. 11 is a view schematically showing a process of forming a transmittance variable optical laminate to which a second layer is coupled according to another embodiment of the present disclosure. According to the embodiment of FIG. 11, the alignment layer 140 may be additionally laminated on the polarizing plate 120, the refractive index-matching layer 150, and the conductive layer 130.

The alignment layer 140 is not particularly limited as long as it can provide orientation to a liquid crystal and, for example, the alignment layer 140 may be substantially the same as the alignment layer 140 in FIG. 3 described above.

The alignment layer 140 is formed by applying and curing the alignment layer coating composition on the transparent conductive layer 130, and then the composition for liquid crystal coating is applied and cured on the alignment layer 140, so that the polarizing plate including the liquid crystal layer may be formed on the alignment layer.

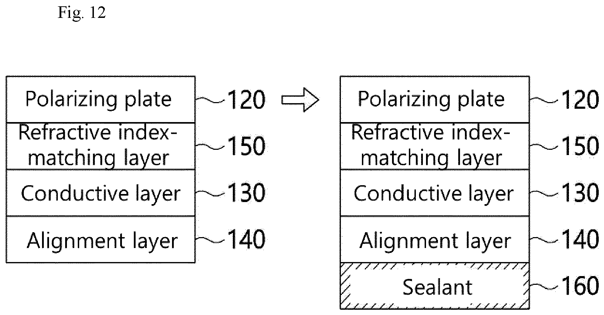

FIG. 12 is a view schematically showing a process of forming a transmittance variable optical laminate to which a second layer is coupled according to another embodiment of the present disclosure. According to the embodiment of FIG. 12, the sealant layer 160 formed at an outer portion of the liquid crystal layer may be formed on the polarizing plate 120, the refractive index-matching layer 150, the conductive layer 130, the alignment layer 140. The sealant layer 160 is not particularly limited as long as it can couple the two different polarizing plates to each other and protect the liquid crystal layer from the external space and, for example, the sealant layer 160 may be substantially the same as the sealant layer 160 of FIG. 6 described above.

The sealant layer 160 may be formed in a method commonly used in the art and, for example, may be formed drawing a sealant at an outer portion of the liquid crystal layer (i.e., inactivate region) with a dispenser having a nozzle. Then, the optical laminate of the present disclosure may be manufactured by bonding and curing the optical laminate, etc. of FIG. 11, and curing of the sealant may be performed in an UV irradiation and/or heating method.

In addition to the transmittance variable optical laminate, the present disclosure includes a smart window including the same. Furthermore, the present disclosure includes a vehicle in which the smart window is applied to at least one of front windows, rear windows, side windows, sunroof windows, and inner partitions, and a building window including the smart window.

Hereinbelow, an embodiment of the present disclosure will be described in detail. However, the present disclosure may not be limited to embodiments disclosed below and may be implemented in various shapes, and the embodiments merely ensure that the present disclosure of the present disclosure is complete and is provided to fully inform those skilled in the art of the scope of the invention, and may be defined by the scope of the claims.

**Example and comparative example: manufacturing of the optical laminate**

The optical laminate according to the example and the comparative example including the liquid crystal layer driven in the TN mode between the two different polarizing plates may be manufactured according to the following table 1.

[Table 1]

| Classification | Cross angle ($\theta$) of transmission axes of two different polarizing plates | In-plane phase difference of retardation film at liquid crystal of outer side polarizing plate |
|---|---|---|
| Example 1 | 10° | 60nm |
| Example 2 | 30° | 10nm |
| Example 3 | 40° | 10nm |
| Example 4 | 50° | 60nm |
| Example 5 | 50° | 100nm |
| Example 6 | 30° | 60nm |
| Example 7 | 30° | 100nm |
| Example 8 | 0° | 10nm |
| Comparative example 1 | 60° | 60nm |
| Comparative example 2 | 90° | 60nm |

**Experimental example: transmittance and low illuminance visibility evaluation**

With respect to the examples 1 to 8 and the comparative examples 1 and 2, a pressure sensitive adhesive is coated to both surfaces of the optical laminate and the optical laminate is bonded between glass substrates.
After, each optical laminate of the examples 1 to 8 and comparative examples 1 and 2 bonded between the glass substrates is evaluated in transmittance in the light blocking mode and the visibility in illuminance of 30 lx (low illuminance visibility), and results was shown in the flowing table 2.
The low illuminance visibility evaluation was classified according to the degree of identification, when looking at surrounding objects through the optical laminate.

<Low illuminance visibility evaluation criteria>

∘: Surrounding objects are clearly identified
Δ: Surrounding objects can be identified, but boundaries are vague
X: Surrounding objects cannot be identified or are not visible

[Table 2]

| Classification | Transmittance in light blocking mode | Low illuminance visibility |
|---|---|---|
| Example 1 | 27.5% | ○ |
| Example 2 | 23.7% | ○ |

(continued)

| Classification | Transmittance in light blocking mode | Low illuminance visibility |
|---|---|---|
| Example 3 | 18.6% | Δ |
| Example 4 | 13.7% | Δ |
| Example 5 | 14.7% | Δ |
| Example 6 | 22.1% | ○ |
| Example 7 | 19.3% | ○ |
| Example 8 | 31.7% | ○ |
| Comparative example 1 | 9.7% | X |
| Comparative example 2 | 3.5% | X |

Referring to the table 2, in the examples 1 to 8 in which the cross angle of transmittance axes of the two different polarizing plates is less than or equal to 50°, the transmittance of the optical laminate in the light blocking mode is equal to or higher than 10% and is improved than the transmittance of the optical laminate in the light blocking mode in the comparative examples 1 and 2 in which the cross angle of the transmittance axes is greater than 50°, and the low illuminance visibility is also improved, so that the optical laminate of the examples is effective in blocking external light and in securing visibility at the inside space. Meanwhile, with the optical laminate of the example 8 in which the cross angle of the transmittance axes of the two different polarizing plates is less than 10°, the transmittance in the light blocking mode is greater than 30% so that the external light blocking effect is relatively low but the low illuminance visibility is excellent.

Furthermore, with the optical laminate of the examples 1, 2, 6, and 8 in which the cross angle of transmittance axes of the two different polarizing plates is an angle of 10° to 30°, the transmittance in the light blocking mode is between 10% to 30%. Among then, with the optical laminate of the examples 1, 2, and 6 in which a value of in-plane phase difference is less than or equal to 60nm, the transmittance is between 20% to 30%, and the external light blocking effect and the low illuminance visibility are all excellent.

## Claims

1.  A transmittance variable optical laminate comprising:

    a first polarizing plate including a first transmission axis;
    a second polarizing plate including a second transmission axis;
    a first transparent conductive layer provided on one surface of the first polarizing plate;
    a second transparent conductive layer provided on one surface of the second polarizing plate; and
    a liquid crystal layer provided between the first transparent conductive layer and the second transparent conductive layer,
    wherein the liquid crystal layer is driven in a twisted nematic mode,
    at least one of the first transparent conductive layer and the second transparent conductive layer is formed in directly contact with the polarizing plate, and
    a cross angle of the first transmission axis and the second transmission axis is less than or equal to 50°.

2.  The transmittance variable optical laminate of claim 1, wherein each transparent conductive layer formed in directly contact with each polarizing plate is formed in directly contact with each polarizing plate without a separate substrate between each polarizing plate and each transparent conductive layer.

3.  The transmittance variable optical laminate of claim 1, wherein each transparent conductive layer formed in directly contact with each polarizing plate is formed in directly contact with each polarizing plate with a highly adhesive layer between each polarizing plate and each transparent conductive layer.

4.  The transmittance variable optical laminate of claim 1, wherein total light transmittance in a light blocking mode is 10% to 30%.

5. The transmittance variable optical laminate of claim 1, wherein at least one of the first polarizing plate and the second polarizing plate comprises a polarizer and at least one or more protective layers.

6. The transmittance variable optical laminate of claim 5, wherein the protective layer is a protective film or an optical functional film.

7. The transmittance variable optical laminate of claim 6, wherein the optical functional film is a retardation film.

8. The transmittance variable optical laminate of claim 7, wherein a value of in-plane phase difference of the retardation film is less than or equal to 100nm.

9. The transmittance variable optical laminate of claim 6, wherein the protective film comprises one or more kinds selected from a group consisting of polyethylene terephthalate, polyethylene isophthalate, polyethylene naphthalate, polybutylene terephthalate, diacetyl cellulose, triacetyl cellulose, polycarbonate, polyethylene, polypropylene, polymethyl acrylate, polymethyl methacrylate, polyethyl acrylate), polyethyl methacrylate, and cyclic olefin polymer.

10. The transmittance variable optical laminate of claim 1, wherein the first polarizing plate and the second polarizing plate have the thicknesses of $30\mu M$ to $200\mu m$.

11. The transmittance variable optical laminate of claim 1, wherein the first transparent conductive layer and the second transparent conductive layer comprise one or more kinds selected from a group consisting of transparent conductive oxide, metal, carbonaceous matters, conductive polymers, conductive ink, and nanowires.

12. The transmittance variable optical laminate of claim 1, wherein the liquid crystal layer comprises one or more kinds selected from a group consisting of a ball spacer and a column spacer.

13. The transmittance variable optical laminate of claim 12, wherein the ball spacer has a diameter of $1\mu m$ to $10\mu m$.

14. The transmittance variable optical laminate of claim 12, wherein the ball spacer has an occupancy area in the liquid crystal layer of 0.01% to 10% of the area of the liquid crystal layer.

15. The transmittance variable optical laminate of claim 1, further comprising:
a refractive index-matching layer having a refractive index of 1.4 to 2.6.

16. A manufacturing method of a transmittance variable optical laminate of any one of claims 1 to 15.

17. A smart window comprising a transmittance variable optical laminate of any one of claims 1 to 15.

18. A vehicle in which a smart window of claim 17 is applied to at least one of a front window, a rear window, a side window, a sunroof window, and an inner partition thereof.

19. A window and a door for a building, the window and the door comprising a smart window of claim 17.

Fig. 1

Fig. 2

Fig.3

200

| Polarizing plate | 120 |
| Conductive layer | 130 |
| Alignment layer | 140 |
| Liquid crystal layer | 110 |
| Alignment layer | |
| Conductive layer | |
| Polarizing plate | |

Fig.4

300

| | |
|---|---|
| Polarizing plate | 120 |
| Refractive index-matching layer | 150 |
| Conductive layer | 130 |
| Alignment layer | 140 |
| Liquid crystal layer | 110 |
| Alignment layer | |
| Conductive layer | |
| Refractive index-matching layer | |
| Polarizing plate | |

Fig. 5

300

| | |
|---|---|
| Polarizing plate | 120 |
| Refractive index-matching layer | 150 |
| Conductive layer | 130 |
| Alignment layer | 140 |
| Liquid crystal layer | 110 |
| Alignment layer | |
| Conductive layer | |
| Refractive index-matching layer | |
| Polarizing plate | |
| Pressure sensitive adhesive/adhesive layer | 124 |

Fig. 6

400

| | |
|---|---|
| Polarizing plate | 120 |
| Refractive index-matching layer | 150 |
| Conductive layer | 130 |
| Alignment layer | 140 |
| Sealant | 160 |

Fig. 7

500

| | |
|---|---|
| First protective layer | 121 |
| PVA | 122 |
| Second protective layer | 123 |
| Refractive index-matching layer | 150 |
| Conductive layer | 130 |
| Alignment layer | 140 |
| Liquid crystal layer | 110 |
| Alignment layer | |
| Conductive layer | |
| Refractive index-matching layer | |
| Second protective layer | |
| PVA | |
| First protective layer | |

Fig. 8

| First protective layer | ~121 |
| First protective layer |
| Pressure sensitive adhesive/adhesive layer | 124 |
| PVA | ~122 |
| PVA |
| Pressure sensitive adhesive/adhesive layer |
| Second protective layer | ~123 |
| Second protective layer |

| First protective layer |
| PVA |
| Second protective layer |

120

| Polarizing plate |

Fig. 9

120

| Polarizing plate |

| Polarizing plate | ~120 |
| Conductive layer | ~130 |

Fig. 10

120

Polarizing plate

⇨

120

| Polarizing plate |
| Refractive index-matching layer |

150

⇨

| Polarizing plate | ⌐120 |
| Refractive index-matching layer | ⌐150 |
| Conductive layer | ⌐130 |

Fig. 11

| Polarizing plate | ⌐120 |
| Refractive index-matching layer | ⌐150 |
| Conductive layer | ⌐130 |

⇨

| Polarizing plate | ⌐120 |
| Refractive index-matching layer | ⌐150 |
| Conductive layer | ⌐130 |
| Alignment layer | ⌐140 |

Fig. 12

| Polarizing plate | ~120 |
| Refractive index-matching layer | ~150 |
| Conductive layer | ~130 |
| Alignment layer | ~140 |

⇒

| Polarizing plate | ~120 |
| Refractive index-matching layer | ~150 |
| Conductive layer | ~130 |
| Alignment layer | ~140 |
| Sealant | ~160 |

## INTERNATIONAL SEARCH REPORT

| | International application No. |
|---|---|
| | **PCT/KR2022/007589** |

### A. CLASSIFICATION OF SUBJECT MATTER

**G02F 1/1337**(2006.01)i; **G02B 5/30**(2006.01)i; **G02F 1/1335**(2006.01)i; **G02F 1/1343**(2006.01)i; **G02F 1/139**(2006.01)i; **G02F 1/1339**(2006.01)i

According to International Patent Classification (IPC) or to both national classification and IPC

### B. FIELDS SEARCHED

Minimum documentation searched (classification system followed by classification symbols)

G02F 1/1337(2006.01); B32B 7/02(2006.01); B32B 7/023(2019.01); B32B 7/12(2006.01); G02B 5/20(2006.01); G02B 5/30(2006.01); G02F 1/01(2006.01); G02F 1/1335(2006.01); G02F 1/139(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 광학 적층체(optical laminate), 편광자(polarizer), 보호층(protecting layer), 투명 도전층(transparent conductive layer), 투과율(transmittance)

### C. DOCUMENTS CONSIDERED TO BE RELEVANT

| Category* | Citation of document, with indication, where appropriate, of the relevant passages | Relevant to claim No. |
|---|---|---|
| Y | KR 10-2014-0026291 A (BOE TECHNOLOGY GROUP CO., LTD. et al.) 05 March 2014 (2014-03-05) See paragraphs [0029], [0039]-[0040] and [0047]; and figure 8. | 1-19 |
| Y | KR 10-1905119 B1 (NDIS CORPORATION) 08 October 2018 (2018-10-08) See paragraphs [0117]-[0118] and [0126]-[0127]; and figures 17-18 and 20. | 1-19 |
| Y | KR 10-2018-0030564 A (SUMITOMO CHEMICAL CO., LTD.) 23 March 2018 (2018-03-23) See paragraphs [0029]-[0030] and [0036]; claim 1; and figures 1-2. | 5-10 |
| Y | KR 10-2021-0049688 A (LG CHEM, LTD.) 06 May 2021 (2021-05-06) See paragraphs [0063], [0069]-[0071] and [0074]; and figure 4. | 12-14 |
| Y | KR 10-2015-0105266 A (LG CHEM, LTD.) 16 September 2015 (2015-09-16) See paragraphs [0037], [0040] and [0047]-[0049]. | 15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 September 2022** | **07 September 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/007589**

| Patent document cited in search report | | Publication date (day/month/year) | Patent family member(s) | | | Publication date (day/month/year) |
|---|---|---|---|---|---|---|
| KR 10-2014-0026291 | A | 05 March 2014 | CN | 102830534 | A | 19 December 2012 |
| | | | EP | 2701001 | A1 | 26 February 2014 |
| | | | JP | 2014-041350 | A | 06 March 2014 |
| | | | JP | 6285126 | B2 | 28 February 2018 |
| | | | US | 2014-0055723 | A1 | 27 February 2014 |
| KR 10-1905119 | B1 | 08 October 2018 | US | 11281064 | B2 | 22 March 2022 |
| | | | US | 2021-0165259 | A1 | 03 June 2021 |
| | | | WO | 2019-074272 | A1 | 18 April 2019 |
| KR 10-2018-0030564 | A | 23 March 2018 | CN | 107850724 | A | 27 March 2018 |
| | | | CN | 107850724 | B | 23 April 2019 |
| | | | JP | 2018-028668 | A | 22 February 2018 |
| | | | JP | 6279093 | B2 | 14 February 2018 |
| | | | KR | 10-1945164 | B1 | 01 February 2019 |
| | | | TW | 201727281 | A | 01 August 2017 |
| | | | TW | I644130 | B | 11 December 2018 |
| | | | WO | 2017-026078 | A1 | 16 February 2017 |
| | | | WO | 2017-026403 | A1 | 16 February 2017 |
| KR 10-2021-0049688 | A | 06 May 2021 | TW | 202134699 | A | 16 September 2021 |
| | | | WO | 2021-080361 | A1 | 29 April 2021 |
| KR 10-2015-0105266 | A | 16 September 2015 | CN | 105723275 | A | 29 June 2016 |
| | | | CN | 105723275 | B | 11 June 2019 |
| | | | CN | 105874379 | A | 17 August 2016 |
| | | | CN | 105874379 | B | 01 October 2019 |
| | | | EP | 3115832 | A1 | 11 January 2017 |
| | | | EP | 3115832 | B1 | 20 February 2019 |
| | | | EP | 3115834 | A1 | 11 January 2017 |
| | | | EP | 3115834 | B1 | 30 January 2019 |
| | | | JP | 2017-508169 | A | 23 March 2017 |
| | | | JP | 2017-508997 | A | 30 March 2017 |
| | | | JP | 6326693 | B2 | 23 May 2018 |
| | | | JP | 6450998 | B2 | 16 January 2019 |
| | | | KR | 10-1630118 | B1 | 13 June 2016 |
| | | | KR | 10-1630119 | B1 | 13 June 2016 |
| | | | KR | 10-2015-0105249 | A | 16 September 2015 |
| | | | TW | 201539097 | A | 16 October 2015 |
| | | | TW | 201602678 | A | 16 January 2016 |
| | | | TW | I536087 | B | 01 June 2016 |
| | | | TW | I599814 | B | 21 September 2017 |
| | | | US | 2016-0291357 | A1 | 06 October 2016 |
| | | | US | 2016-0377902 | A1 | 29 December 2016 |
| | | | US | 9904129 | B2 | 27 February 2018 |
| | | | US | 9958742 | B2 | 01 May 2018 |
| | | | WO | 2015-133862 | A1 | 11 September 2015 |
| | | | WO | 2015-133878 | A1 | 11 September 2015 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018010035 A